# EUROPEAN PATENT SPECIFICATION

(11) **EP 3 079 315 B1**
(45) Date of publication and mention of the grant of the patent: **13.06.2018**
(21) Application number: 16164544.5
(22) Date of filing: 08.04.2016
(51) Int. Cl.: H04L 12/851, H04L 12/873

(54) **BANDWIDTH PRIORITIZATION**
BANDBREITENPRIORISIERUNG
HIÉRARCHISATION DE LARGEUR DE BANDE

(30) Priority: 10.04.2015 US 201514683372
(43) Date of publication of application: 12.10.2016
(73) Proprietor: Lenovo (Singapore) Pte. Ltd., Singapore 556741 (SG)
(72) Inventor: Peterson, Nathan J., Oxford, NC 27565 (US); Waltermann, Rod D., Rougemont, NC North Carolina 27572 (US); VanBlon, Russell Speight, Raleigh, NC North Carolina 27615 (US); Mese, John Carl, Cary, NC North Carolina 27513 (US); Weksler, Arnold S., Raleigh, NC North Carolina 27613 (US)
(74) Representative: Leffers, Thomas

(56) References cited:
- EP-A1- 2 501 105
- EP-A2- 2 490 465
- US-A1- 2015 098 390

## Description

### BACKGROUND

The Internet has become an integral part of society. No longer is the Internet simply a method of communication. It has become an everyday part of life for most people. The Internet enables people to easily consume entertainment, news, informational guides, keep in touch, conduct research, work remotely, etc. This is largely due to the almost wholesale adoption of Internet-based technology in modern society. Client end installations make use of a router network device that forwards data packets between computer networks. The router allows for multiple devices (e.g., personal computers, smartphones, tablets, etc.) to utilize the same internet connection simultaneously.

Although the use of multiple connections to the Internet (e.g., using one or more devices) can greatly increase the usability of a single internet connection, it can also cause problems. One such problem is that multiple streams lead to increased bandwidth demand. For example, if a home internet connection has a 35 Mb/s rated download connection and one device requires 20 Mb/s to stream video, the remaining 15 Mb/s must be split between the other devices on the network. This can cause network delays or interruptions and reduce the quality of a user's experience.
US 2015/0098390 A1 discloses a method, wherein a characteristic of a network connection is identified, wherein two or more bandwidth demands associated with the network connection are identified, wherein it is determined, based on the characteristic, that the two or more bandwidth demands require a bandwidth proitization, and wherein based on the determination, at least one of the two or more bandwidths demands is prioritized.

### BRIEF SUMMARY

In summary, one aspect provides a method, comprising: identifying, using a processor, a characteristic of a network connection; identifying, using the processor, two or more bandwidth demands associated with the network connection; determining, based on the characteristic, that the two or more bandwidth demands require a bandwidth prioritization; and prioritizing, based on the determining, at least one of the two or more bandwidth demands.

Another aspect provides an information handling device, comprising: a processor; a memory device that stores instructions executable by the processor to: identify a characteristic of a network connection; identify two or more bandwidth demands associated with the network connection; determine, based on the characteristic, that the two or more bandwidth demands require a bandwidth prioritization; and prioritize, based on the determining, at least one of the two or more bandwidth demands.

A further aspect provides a product, comprising: a storage device having code stored therewith, the code being executable by a processor and comprising: code that identifies a characteristic of a network connection; code that identifies two or more bandwidth demands associated with the network connection; code that determines, based on the characteristic, that the two or more bandwidth demands require a bandwidth prioritization; and code that prioritizes, based on the determining, at least one of the two or more bandwidth demands.

The foregoing is a summary and thus may contain simplifications, generalizations, and omissions of detail; consequently, those skilled in the art will appreciate that the summary is illustrative only and is not intended to be in any way limiting.

For a better understanding of the embodiments, together with other and further features and advantages thereof, reference is made to the following description, taken in conjunction with the accompanying drawings. The scope of the invention will be pointed out in the appended claims.

### BRIEF DESCRIPTION OF THE SEVERAL VIEWS OF THE DRAWINGS

FIG. 1 illustrates an example of information handling device circuitry.
FIG. 2 illustrates another example of information handling device circuitry.
FIG. 3 illustrates an example method of bandwidth prioritization.
FIG. 4 illustrates an additional example method of bandwidth prioritization.

### DETAILED DESCRIPTION

It will be readily understood that the components of the embodiments, as generally described and illustrated in the figures herein, may be arranged and designed in a wide variety of different configurations in addition to the described example embodiments. Thus, the following more detailed description of the example embodiments, as represented in the figures, is not intended to limit the scope of the embodiments, as claimed, but is merely representative of example embodiments.

Reference throughout this specification to "one embodiment" or "an embodiment" (or the like) means that a particular feature, structure, or characteristic described in connection with the embodiment is included in at least one embodiment. Thus, the appearance of the phrases "in one embodiment" or "in an embodiment" or the like in various places throughout this specification are not necessarily all referring to the same embodiment.

Furthermore, the described features, structures, or characteristics may be combined in any suitable manner in one or more embodiments. In the following description, numerous specific details are provided to give a thorough understanding of embodiments. One skilled in the relevant art will recognize, however, that the various embodiments can be practiced without one or more of the specific details, or with other methods, components, materials, et cetera. In other instances, well known structures, materials, or operations are not shown or described in detail to avoid obfuscation.

As more and more of our electronic services become Internet based (e.g., TVs, smartphones, smart watches and wearables, tablets, etc., all connect to and make use of the Internet), the broadband demands of a typical connection continue to balloon. Through the use of routers, multiple streams of Internet traffic for one or more device may share a single internet service provider (ISP) connection. Although the broadband market has increased somewhat to meet this spike in user demand, it has been unable to keep pace with the ravenous requirements of users for connectivity. The availability of on demand video and/or audio streaming combined with the number of devices a typical household has can quickly max out the available bandwidth of a single ISP connection.

When the ISP connection creates a bottleneck, slowing down the data flow, the available bandwidth allotted to each individual request is restricted. This can lead to a degradation is quality (e.g., the resolution of a video stream is reduced) or compete service disruption (e.g., video playback is stopped to allow for buffering). Currently, many routers used in home and business networks have several levels of quality of service (QOS) support available that attempt to address such situations.

QOS techniques allow a user to identify the type of data traffic requesting bandwidth and manage it by assigning a priority to each request. For example, a router may be configured to identify traffic based on specific ports a service or application uses to reach the Internet, and can also assign priority based on internet protocol (IP) and media access control (MAC) addresses.

However, the QOS settings are typically buried deep within a router's configuration setting menu and the QOS settings are static. This technical issue presents problems for a user in that the settings can be complex and difficult for a typical user to navigate and properly set up. Moreover, many users are unaware of the reasoning behind why their Internet experience is suffering (e.g., they assume it is the specific computer or website they are visiting, suspect an ISP may not be performing as advertised, etc.). This can lead to most users ignoring these QOS settings altogether. Therefore, a solution that helps guide a user in determining priority and offering a more convenient method for prioritization including real time collision assistance is needed.

Accordingly, an embodiment provides a method of determining the available bandwidth capacity (e.g., the maximum bit-rate provided by the ISP). An embodiment then monitors all bandwidth requests, which can come from multiple devices or a single device. Based on this real time monitoring, an embodiment determines if the bandwidth requests exceed the available capacity or a set amount, even if below the maximum available capacity. If at any point the requests exceed the capacity, an embodiment may automatically apply a technique to intelligently manage the streams competing for the available bandwidth. This may include a notification that alerts the user to the problem and offers available solutions. For example, an embodiment may prioritize the current bandwidth demands based on device or service. Not only does this inform the user of possible collisions or quality degradation, but it also offers an easily implemented solution without requiring the user to navigate the overly complex router settings. In an embodiment, once the user selects the prioritization, a prioritization may be implemented through the use of QOS or like system. This may include, for example, promoting connectivity of one stream of traffic over another, lower priority stream. The promoting or shifting of priority may include throttling or slowing or even shutting off, temporarily or permanently, a particular stream or streams in favor of providing bandwidth to another, higher priority stream.

The illustrated example embodiments will be best understood by reference to the figures. The following description is intended only by way of example, and simply illustrates certain example embodiments.

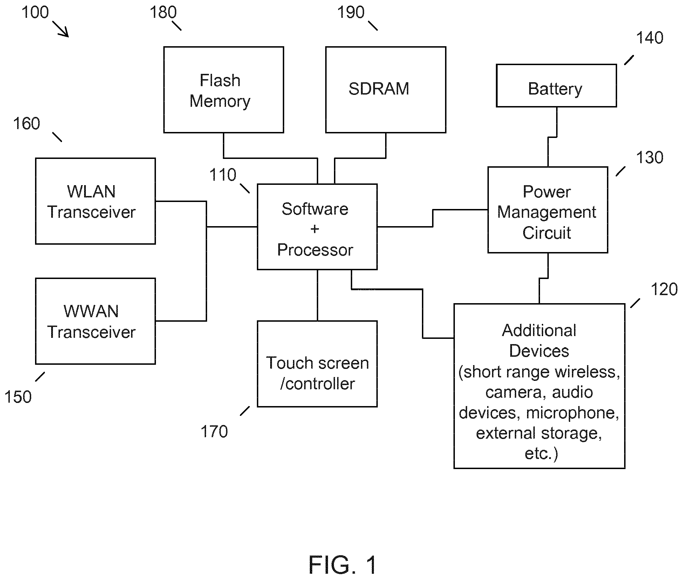

While various other circuits, circuitry or components may be utilized in information handling devices, with regard to smart phone and/or tablet circuitry 100, an example illustrated in FIG. 1 includes a system on a chip design found for example in tablet or other mobile computing platforms. Software and processor(s) are combined in a single chip 110. Processors comprise internal arithmetic units, registers, cache memory, busses, I/O ports, etc., as is well known in the art. Internal busses and the like depend on different vendors, but essentially all the peripheral devices (120) may attach to a single chip 110. The circuitry 100 combines the processor, memory control, and I/O controller hub all into a single chip 110. Also, systems 100 of this type do not typically use SATA or PCI or LPC. Common interfaces, for example, include SDIO and I2C.

There are power management chip(s) 130, e.g., a battery management unit, BMU, which manage power as supplied, for example, via a rechargeable battery 140, which may be recharged by a connection to a power source (not shown). In at least one design, a single chip, such as 110, is used to supply BIOS like functionality and DRAM memory.

System 100 typically includes one or more of a WWAN transceiver 150 and a WLAN transceiver 160 for connecting to various networks, such as telecommunications networks and wireless Internet devices, e.g., access points. Additionally, devices 120 are commonly included, e.g., short range wireless devices. System 100 often includes a touch screen 170 for data input and display/rendering. System 100 also typically includes various memory devices, for example flash memory 180 and SDRAM 190.

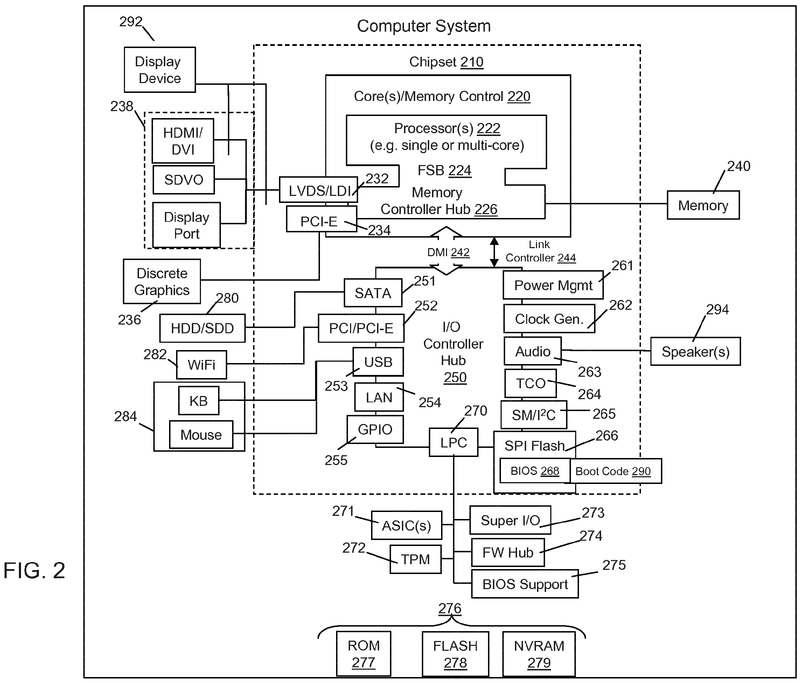

FIG. 2 depicts a block diagram of another example of information handling device circuits, circuitry or components. The example depicted in FIG. 2 may correspond to computing systems such as the THINKPAD series of personal computers sold by Lenovo (US) Inc. of Morrisville, NC, or other devices. As is apparent from the description herein, embodiments may include other features or only some of the features of the example illustrated in FIG. 2.

The example of FIG. 2 includes a so-called chipset 210 (a group of integrated circuits, or chips, that work together, chipsets) with an architecture that may vary depending on manufacturer (for example, INTEL, AMD, ARM, etc.). INTEL is a registered trademark of Intel Corporation in the United States and other countries. AMD is a registered trademark of Advanced Micro Devices, Inc. in the United States and other countries. ARM is an unregistered trademark of ARM Holdings plc in the United States and other countries. The architecture of the chipset 210 includes a core and memory control group 220 and an I/O controller hub 250 that exchanges information (for example, data, signals, commands, etc.) via a direct management interface (DMI) 242 or a link controller 244. In FIG. 2, the DMI 242 is a chip-to-chip interface (sometimes referred to as being a link between a "northbridge" and a "southbridge"). The core and memory control group 220 include one or more processors 222 (for example, single or multi-core) and a memory controller hub 226 that exchange information via a front side bus (FSB) 224; noting that components of the group 220 may be integrated in a chip that supplants the conventional "northbridge" style architecture. One or more processors 222 comprise internal arithmetic units, registers, cache memory, busses, I/O ports, etc., as is well known in the art.

In FIG. 2, the memory controller hub 226 interfaces with memory 240 (for example, to provide support for a type of RAM that may be referred to as "system memory" or "memory"). The memory controller hub 226 further includes a low voltage differential signaling (LVDS) interface 232 for a display device 292 (for example, a CRT, a flat panel, touch screen, etc.). A block 238 includes some technologies that may be supported via the LVDS interface 232 (for example, serial digital video, HDMI/DVI, display port). The memory controller hub 226 also includes a PCI-express interface (PCI-E) 234 that may support discrete graphics 236.

In FIG. 2, the I/O hub controller 250 includes a SATA interface 251 (for example, for HDDs, SDDs, etc., 280), a PCI-E interface 252 (for example, for wireless connections 282), a USB interface 253 (for example, for devices 284 such as a digitizer, keyboard, mice, cameras, phones, microphones, storage, other connected devices, etc.), a network interface 254 (for example, LAN), a GPIO interface 255, a LPC interface 270 (for ASICs 271, a TPM 272, a super I/O 273, a firmware hub 274, BIOS support 275 as well as various types of memory 276 such as ROM 277, Flash 278, and NVRAM 279), a power management interface 261, a clock generator interface 262, an audio interface 263 (for example, for speakers 294), a TCO interface 264, a system management bus interface 265, and SPI Flash 266, which can include BIOS 268 and boot code 290. The I/O hub controller 250 may include gigabit Ethernet support.

The system, upon power on, may be configured to execute boot code 290 for the BIOS 268, as stored within the SPI Flash 266, and thereafter processes data under the control of one or more operating systems and application software (for example, stored in system memory 240). An operating system may be stored in any of a variety of locations and accessed, for example, according to instructions of the BIOS 268. As described herein, a device may include fewer or more features than shown in the system of FIG. 2.

Information handling device circuitry, as for example outlined in FIG. 1 or FIG. 2, may be used in various devices that implement some or all of the functionality described in connection with the various embodiments. For example, the circuitry outlined in FIG. 1 and/or FIG. 2 may be implemented in devices such as tablets, smart phones, personal computer devices generally, and/or other electronic devices such as a network router device. Such devices may be used to manage or be involved with helping to manage bandwidth access to remote data (e.g., data from the Internet or other network) for connected network devices, e.g., client devices.

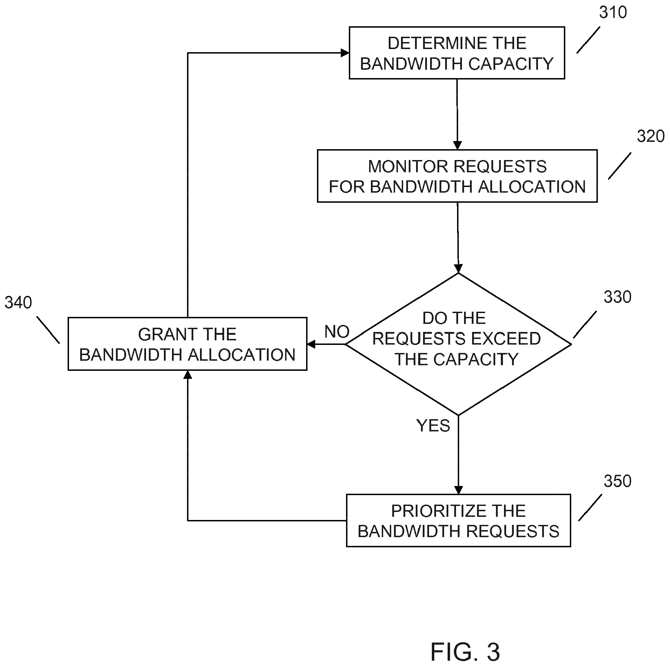

Referring now to FIG. 3, an embodiment determines the bandwidth capacity of a network connection at 310. For example, typical ISP(s) provide a capped amount of bandwidth depending on the technology employed (e.g., fiber optic network, cable network, etc.), the needs of the consumer and/or the payment structure of the connection service. For example, assuming a broadband network is available, a residential customer can purchase a certain number of megabits per second (Mbps), for example 25Mbps, for a cheaper monthly fee than 75Mbps. An embodiment may determine the bandwidth capacity a variety of ways, for example requesting a known value determining it via a speed test. Therein, according to the invention, the bandwidth value is updated or changed, e.g., once a day, once a week, etc., by conducting a speed test

Once a value (current or historic) for bandwidth capacity is determined at 310, an embodiment monitors all requests for bandwidth allocation (e.g., requests for data transmission from device(s) using this network connection) at 320. As a non-limiting example, an embodiment may monitor the bandwidth required for a user to stream video on their tablet device while also monitoring the bandwidth required for a second user to play on online video game using the same network connection. As described herein, the multiple connection requests may come from a single device. Regardless of the number of devices or users, each of these data requests requires a piece of the bandwidth capacity pie.

An embodiment determines if the requested bandwidth exceeds the capacity at 330, e.g., based on the known bandwidth capacity determined and the monitored bandwidth requests analyzed. If the requested bandwidth does not exceed the bandwidth capacity, as determined at 330, no action may be required and the requested allocation is granted to each requesting device, application, service, etc., at 340. However, if the bandwidth capacity would be exceeded (e.g., maxed out, over a predefined or dynamically defined ceiling, etc.) based on the requests, an embodiment may prioritize the bandwidth requests at 350 prior to granting a particular request that impacts the bandwidth allocation.

In an embodiment, the prioritization may be automated based on predetermined rules. The rules may be set by an end user, set by an application or service, and/or learned over time based on previous user selections, access conflicts, etc. Once the bandwidth requests are prioritized, an allocation of bandwidth is granted to each request based on the prioritization at 340. In some cases, the bandwidth allocation may be zero, i.e., a connection may be terminated or paused. An embodiment may also grant certain requests at a limited bit-rate.

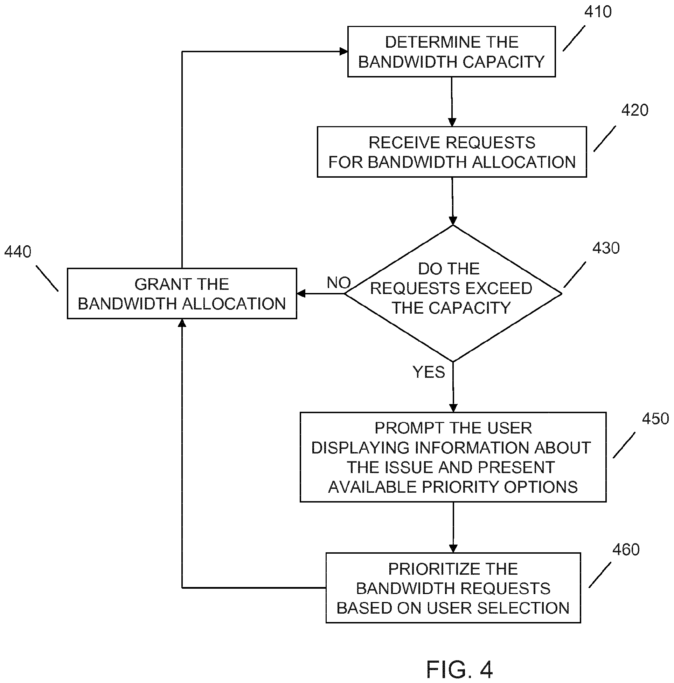

Referring now to FIG. 4, an embodiment may determine the available bandwidth capacity at 410. An embodiment may then monitor requests for bandwidth allocation at 420. Based on the monitoring of bandwidth requests, an embodiment determines if the demand for bandwidth exceeds the available capacity at 430. As described herein, if the demand does not exceed the available capacity, the requests for data transmission is granted at 440 with no further required action.

Alternatively, if the requested bandwidth exceeds the available bandwidth capacity, or a determined limit that is below the actual maximum, an embodiment may provide an indication of this situation to the user at 450. For example, an embodiment may provide a notification or prompt at 450. In an embodiment, the notification may be received at a single device connected to the network, or at every device connected to the network. Additionally, the notification may be received at a device not directly connected to the network (e.g., a notification application on a smartphone). In a further embodiment, the notification may contain detailed information regarding the bandwidth conflict. For example, the notification may include details regarding which device(s) is/are requesting the bandwidth, how much bandwidth is needed, which application is requesting the bandwidth, which user is requesting the bandwidth, the amount of bandwidth requested or used, etc. Based on this information, a user can determine what if any of the requests for bandwidth are the most important or are time sensitive.

Once the user is prompted with the notification at 450 indicating that the available bandwidth has been exceeded or will be exceeded, the user may make a determination about which request(s) should be granted or continue to receive bandwidth. Based on the user's input, an embodiment implements the desired prioritization. For example, the user may select that a streaming video is of the highest priority to avoid degradation in video quality or buffering, whereas a software update that is not time sensitive may be of lower priority. The user may also determine if they want a particular prioritization to be temporary or permanent in nature as well as determining if this prioritization decision should impact like conflict situations. The user input may be received at the notification, i.e., at the user device, or at a secondary application or device. By way of example, the user may receive a notification at their smartphone and subsequently make the selection on their laptop.

In an embodiment, the prioritization may be implemented based on an internet protocol (IP) address and/or a media access control (MAC) address of a device. For example, a user may assign all of their media devices (e.g., ROKU, CHROMECAST, APPLE TV, etc.) to a subset of IP addresses and grant them a high or low priority. Alternatively, a user may simply select which devices, media types, application types, user accounts, etc., are to be prioritized/de-prioritized and such information may be used by an embodiment to automatically implement a prioritization scheme when a bandwidth conflict is predicted or detected. ROKU is a registered trademark of Roku, Inc. in the United States of America and other countries. CHROMECAST is a registered trademark of Google Inc. in the United States of America and other countries. APPLE TV is a registered trademark of Apple Inc. in the United States of America and other countries.

An embodiment may prioritize based on the specific ports, e.g., used by specific applications. For example, an embodiment may select certain applications or ports (e.g., 80 and 443) to move to the bottom of the prioritization list in order to limit the amount of network traffic allowed to a software application that uses those ports (e.g., NETFLIX). NETFLIX is a registered trademark of Netflix, Inc. in the United States of America and other countries.

In an embodiment, the prioritization may be based on the device network name. This may allow a less tech savvy user to identify which devices on their network they are prioritizing. An embodiment may implement prioritization based on user login credentials. For example, if a network domain has user credentials or a software application requires user credentials (e.g., NETFLIX), once these credentials are entered, they may be used to identify the active user.

In a further embodiment, an intelligent agent may learn specific usage patterns. For example, a user may regularly request streaming audio from a specific source or regularly launch a particular online gaming application on a device that requires some form of user credentials. These user credentials allow the intelligent agent to associate a particular user with their usage patterns. In an embodiment, the learned usage patterns may be stored and associated with future similar usage patterns thereby determining if, based on the requested data, a specific known user is requesting bandwidth and which prioritization scheme should be employed. This allows an embodiment to assign a particular user a higher or lower priority, and usage pattern based learning may be used to apply a prioritization technique even when a particular user is on a device that doesn't require user credentials.

In an embodiment, the bandwidth requests are prioritized based on the user determination and selection, e.g., illustrated at 460. Once the prioritization is determined, an allocation of bandwidth is granted to each request based on the prioritization at 440. For example, certain requests may be granted instant access at a limited bit-rate, some requests may be completely delayed until such time as available non-prioritized bandwidth become available and some requests may receive unrestricted bandwidth access.

Accordingly, as illustrated by the example embodiments and figures, an embodiment provides for determining the available bandwidth capacity and prioritization of the bandwidth requests based on a variety of factors. The various embodiments described herein thus represent a technical improvement to the ability of a user to customize their internet experience. The limiting nature of QOS combined with the complexity of the implementation is a hindrance to typical users. However, the automatic and notification-based techniques employed by an embodiment provide a user with a management capability for managing various competing bandwidth requests, maximizing a limited bandwidth connection.

As will be appreciated by one skilled in the art, various aspects may be embodied as a system, method or device program product. Accordingly, aspects may take the form of an entirely hardware embodiment or an embodiment including software that may all generally be referred to herein as a "circuit," "module" or "system." Furthermore, aspects may take the form of a device program product embodied in one or more device readable medium(s) having device readable program code embodied therewith.

It should be noted that the various functions described herein may be implemented using instructions stored on a device readable storage medium such as a non-signal storage device that are executed by a processor. A storage device may be, for example, an electronic, magnetic, optical, electromagnetic, infrared, or semiconductor system, apparatus, or device, or any suitable combination of the foregoing. More specific examples of a storage medium would include the following: a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a storage device is not a signal and "non-transitory" includes all media except signal media.

Program code embodied on a storage medium may be transmitted using any appropriate medium, including but not limited to wireless, wireline, optical fiber cable, RF, et cetera, or any suitable combination of the foregoing.

Program code for carrying out operations may be written in any combination of one or more programming languages. The program code may execute entirely on a single device, partly on a single device, as a stand-alone software package, partly on single device and partly on another device, or entirely on the other device. In some cases, the devices may be connected through any type of connection or network, including a local area network (LAN) or a wide area network (WAN), or the connection may be made through other devices (for example, through the Internet using an Internet Service Provider), through wireless connections, e.g., near-field communication, or through a hard wire connection, such as over a USB connection.

Example embodiments are described herein with reference to the figures, which illustrate example methods, devices and program products according to various example embodiments. It will be understood that the actions and functionality may be implemented at least in part by program instructions. These program instructions may be provided to a processor of a device, a special purpose information handling device, or other programmable data processing device to produce a machine, such that the instructions, which execute via a processor of the device implement the functions/acts specified.

It is worth noting that while specific blocks are used in the figures, and a particular ordering of blocks has been illustrated, these are non-limiting examples. In certain contexts, two or more blocks may be combined, a block may be split into two or more blocks, or certain blocks may be re-ordered or re-organized as appropriate, as the explicit illustrated examples are used only for descriptive purposes and are not to be construed as limiting.

As used herein, the singular "a" and "an" may be construed as including the plural "one or more" unless clearly indicated otherwise.

This disclosure has been presented for purposes of illustration and description but is not intended to be exhaustive or limiting. Many modifications and variations will be apparent to those of ordinary skill in the art. The example embodiments were chosen and described in order to explain principles and practical

application, and to enable others of ordinary skill in the art to understand the disclosure for various embodiments with various modifications as are suited to the particular use contemplated.

Thus, although illustrative example embodiments have been described herein with reference to the accompanying figures, it is to be understood that this description is not limiting and that various other changes and modifications may be affected therein by one skilled in the art without departing from the scope of the disclosure.

## Claims

1. A method, comprising:
identifying, using a processor, a characteristic of a network connection (310, 410);
identifying, using the processor, two or more bandwidth demands associated with the network connection (320, 420);
determining, based on the characteristic, that the two or more bandwidth demands require a bandwidth prioritization (330, 430); and
prioritizing, based on the determining, at least one of the two or more bandwidth demands (350, 405), **characterized in that** the characteristic comprises a bandwidth capacity of the network connection, wherein the identification of the bandwidth capacity of the network connection is updated at predefined times.

2. The method of claim 1, wherein the two or more bandwidth demands are from a single device.

3. The method of claim 1, further comprising providing a notification of an exceeded bandwidth capacity (450).

4. The method of claim 1, wherein the prioritizing is based on an internet protocol (IP) address of a device.

5. The method of claim 1, wherein the prioritizing is based on a media access control (MAC) address of a device.

6. The method of claim 1, wherein the prioritizing is based on an application characteristic.

7. The method of claim 1, wherein the prioritizing is based on a device characteristic.

8. The method of claim 1, wherein the prioritizing is based on a user.

9. The method of claim 1, wherein:
the prioritizing comprises adjusting the prioritized at least one of the two or more bandwidth demands based on the bandwidth capacity.

10. The method of claim 1, further comprising:
storing usage pattern data for the network connection;
wherein the prioritizing is based on the usage pattern data.

11. An information handling device, comprising:
a processor;
a memory device that stores instructions executable by the processor to:
identify a characteristic of a network connection;
identify two or more bandwidth demands associated with the network connection;
determine, based on the characteristic, that the two or more bandwidth demands require a bandwidth prioritization; and
prioritize, based on the determining, at least one of the two or more bandwidth demands, **characterized in that** the characteristic comprises a bandwidth capacity of the network connection, wherein the identification of the bandwidth capacity of the network connection is updated at predefined times.

12. The information handling device of claim 11, wherein the two or more bandwidth demands are from a single device.

13. The information handling device of claim 11, wherein the instructions are further executable by the processor to:
provide a notification of an exceeded bandwidth capacity.

14. The information handling device of claim 11, wherein the prioritizing is based on a device characteristic, wherein the characteristic comprises at least one of: an internet protocol (IP) address of a device and a media access control (MAC) address.

15. The information handling device of claim 11, wherein the prioritizing is based on an application characteristic.

16. The information handling device of claim 11, wherein the prioritizing is based on a device characteristic.

17. The information handling device of claim 11, wherein the prioritizing is based on a user.

18. The information handling device of claim 11, wherein:
the prioritizing comprises adjusting the prioritized at least one of the two or more bandwidth demands based on the bandwidth capacity.

19. The information handling device of claim 11, wherein the instructions are further executable by the process to:
store usage pattern data for the network connection;
wherein the prioritizing is based on the usage pattern data.

20. A product, comprising:
a storage device having code stored therewith, the code being executable by a processor and comprising:
code that identifies a characteristic of a network connection;
code that identifies two or more bandwidth demands associated with the network connection;
code that determines, based on the characteristic, that the two or more bandwidth demands require a bandwidth prioritization; and
code that prioritizes, based on the determining, at least one of the two or more bandwidth demands, **characterized in that** the characteristic comprises a bandwidth capacity of the network connection, wherein the identification of the bandwidth capacity of the network connection is updated at predefined times.

## Patentansprüche

1. Verfahren, umfassend:
Identifizieren, unter Verwendung eines Prozessors, einer Charakteristik einer Netzwerkverbindung (310, 410);
Identifizieren, unter Verwendung des Prozessors, von zwei oder mehr Bandbreitenanforderungen, die mit der Netzwerkverbindung assoziiert sind (320, 420);
Bestimmen, basierend auf der Charakteristik, dass die zwei oder mehr Bandbreitenanforderungen eine Bandbreitenpriorisierung erfordern (330, 430);
Priorisieren, basierend auf der Bestimmung, von zumindest einer von den zwei oder mehr Bandbreitenanforderungen (350, 450), **dadurch gekennzeichnet, dass** die Charakteristik eine Bandbreitenkapazität der Netzwerkverbindung umfasst, wobei die Identifizierung der Bandbreitenkapazität der Netzwerkverbindung zu vorbestimmten Zeitpunkten aktualisiert wird.

2. Verfahren nach Anspruch 1, wobei die zwei oder mehr Bandbreitenanforderungen von einer einzelnen Vorrichtung stammen.

3. Verfahren nach Anspruch 1, weiter umfassend Bereitstellen einer Benachrichtigung einer überschrittenen Bandbreitenkapazität (450).

4. Verfahren nach Anspruch 1, wobei die Priorisierung auf einer Internet-Protokoll-(IP)-Adresse einer Vorrichtung basiert.

5. Verfahren nach Anspruch 1, wobei die Priorisierung auf einer Medienzugriffskontroll-(MAC)-Adresse einer Vorrichtung basiert.

6. Verfahren nach Anspruch 1, wobei die Priorisierung auf einer Applikationscharakteristik basiert.

7. Verfahren nach Anspruch 1, wobei die Priorisierung auf einer Vorrichtungscharakteristik basiert.

8. Verfahren nach Anspruch 1, wobei die Priorisierung auf einem Nutzer basiert.

9. Verfahren nach Anspruch 1, wobei:
die Priorisierung ein Anpassen der priorisierten zumindest einen von den zwei oder mehr Bandbreitenanforderungen umfasst, basierend auf der Bandbreitenkapazität.

10. Verfahren nach Anspruch 1, weiter umfassend:
Speichern von Benutzungsmusterdaten für die Netzwerkverbindung;
wobei die Priorisierung auf den Benutzungsmusterdaten basiert.

11. Informationsverarbeitungsvorrichtung, umfassend:
einen Prozessor;
eine Speichervorrichtung, die Instruktionen speichert, die von dem Prozessor ausführbar sind, um zu:
Identifizieren einer Charakteristik einer Netzwerkverbindung;
Identifizieren von zwei oder mehr Bandbreitenanforderungen, die mit der Netzwerkverbindung assoziiert sind;
Bestimmen, basierend auf der Charakteristik, dass die zwei oder mehr Bandbreitenanforderungen eine Bandbreitenpriorisierung erfordern;
Priorisieren, basierend auf der Bestimmung, von zumindest einer von den zwei oder mehr Bandbreitenanforderungen, **dadurch gekennzeichnet, dass** die Charakteristik eine Bandbreitenkapazität der Netzwerkverbindung umfasst, wobei die Identifizierung der Bandbreitenkapazität der Netzwerkverbindung zu vorbestimmten Zeitpunkten aktualisiert wird.

12. Informationsverarbeitungsvorrichtung nach Anspruch 11, wobei die zwei oder mehr Bandbreitenanforderungen von einer einzelnen Vorrichtung stammen.

13. Informationsverarbeitungsvorrichtung nach Anspruch 11, wobei die Instruktionen weiter von dem Prozessor ausführbar sind, um zu:
Bereitstellen einer Benachrichtigung einer überschrittenen Bandbreitenkapazität.

14. Informationsverarbeitungsvorrichtung nach Anspruch 11, wobei die Priorisierung auf einer Vorrichtungscharakteristik basiert, wobei die Charakteristik mindestens einen von: einer Internet-Protokoll-(IP)-Adresse einer Vorrichtung und einer Medienzugriffskontroll-(MAC)-Adresse umfasst.

15. Informationsverarbeitungsvorrichtung nach Anspruch 11, wobei die Priorisierung auf einer Applikationscharakteristik basiert.

16. Informationsverarbeitungsvorrichtung nach Anspruch 11, wobei die Priorisierung auf einer Vorrichtungscharakteristik basiert.

17. Informationsverarbeitungsvorrichtung nach Anspruch 11, wobei die Priorisierung auf einem Nutzer basiert.

18. Informationsverarbeitungsvorrichtung nach Anspruch 11, wobei:
die Priorisierung ein Anpassen der priorisierten zumindest einen von den zwei oder mehr Bandbreitenanforderungen umfasst, basierend auf der Bandbreitenkapazität.

19. Informationsverarbeitungsvorrichtung nach Anspruch 11, wobei die Instruktionen weiter ausführbar sind, um zu:
Speichern von Benutzungsmusterdaten für die Netzwerkverbindung;
wobei die Priorisierung auf den Benutzungsmusterdaten basiert.

20. Produkt, umfassend:
eine Speichervorrichtung, die darin gespeicherten Code aufweist, wobei der Code von einem Prozessor ausführbar ist und umfasst:
Code der eine Charakteristik einer Netzwerkverbindung identifiziert;
Code der zwei oder mehr Bandbreitenanforderungen, die mit der Netzwerkverbindung assoziiert sind, identifiziert;
Code der bestimmt, basierend auf der Charakteristik, dass die zwei oder mehr Bandbreitenanforderungen eine Bandbreitenpriorisierung erfordern;
Code der, basierend auf der Bestimmung, zumindest eine von den zwei oder mehr Bandbreitenanforderungen priorisiert, **dadurch gekennzeichnet, dass** die Charakteristik eine Bandbreitenkapazität der Netzwerkverbindung umfasst, wobei die Identifizierung der Bandbreitenkapazität der Netzwerkverbindung zu vorbestimmten Zeitpunkten aktualisiert wird.

## Revendications

1. Procédé consistant à : identifier à l'aide d'un processeur, une caractéristique d'une connexion (310, 410) de réseau ; identifier, à l'aide du processeur, au moins deux demandes de large bande associées à la connexion (320, 420) de réseau ; déterminer, en fonction de la caractéristique, que les au moins deux demandes de large bande nécessitent un classement par ordre de priorité de largeur de bande (330, 430) ;et classer par ordre de priorité, en fonction de la détermination, au moins l'une des deux demandes de largeur de bande (350, 405) ou plus, **caractérisé en ce que** la caractéristique comprend une capacité de largeur de bande de la connexion de réseau, l'identification de la capacité de largeur de bande de la connexion réseau étant mise à jour à des périodes de temps prédéfinies.

2. Procédé selon la revendication 1, les deux demandes de largeur de bande ou plus proviennent d'un seul dispositif.

3. Procédé selon la revendication 1, consistant en outre à fournir une notification d'une capacité dépassée de largeur de bande (450).

4. Procédé selon la revendication 1, le classement par ordre de priorité étant basé sur une adresse de protocole Internet (IP) d'un dispositif.

5. Procédé selon la revendication 1, le classement par ordre de priorité étant basé sur une adresse de contrôle d'accès média (MAC) d'un dispositif.

6. Procédé selon la revendication 1, le classement par ordre de priorité étant basé sur une caractéristique d'application.

7. Procédé selon la revendication 1, le classement par ordre de priorité étant basé sur une caractéristique de dispositif.

8. Procédé selon la revendication 1, le classement par ordre de priorité étant basé sur un utilisateur.

9. Procédé selon la revendication 1, le classement par ordre de priorité consistant à ajuster au moins l'une des deux demandes de largeur de bande prioritaires en fonction de la capacité de largeur de bande.

10. Procédé selon la revendication 1, consistant en outre à : mémoriser des données de motif d'utilisation pour la connexion réseau ; le classement par ordre de priorité étant basé sur les données de motif d'utilisation.

11. Dispositif de traitement d'informations, comprenant : un processeur ; une mémoire qui mémorise des instructions exécutables par le processeur pour : identifier une caractéristique d'une connexion réseau ; identifier deux demandes de largeur de bande ou plus associées à la connexion réseau ; déterminer, en fonction de la caractéristique, que les deux demandes de largeur de bande ou plus exigent un classement par ordre de priorité de largeur de bande ; et classer par ordre de priorité, en fonction de la détermination, au moins l'une des deux demandes de largeur de bande, **caractérisé en ce que** la caractéristique comprenant une capacité de largeur de bande de la connexion réseau, l'identification de la capacité de largeur de bande de la connexion réseau étant mise à jour à des périodes de temps prédéfinies.

12. Dispositif de traitement d'informations selon la revendication 11, les deux demandes de largeur de bande ou plus proviennent d'un dispositif unique.

13. Dispositif de traitement d'informations selon la revendication 11, les instructions étant en outre exécutables par le processeur pour : fournir une notification d'une capacité de largeur de bande dépassée.

14. Dispositif de traitement d'informations selon la revendication 11, le classement par ordre de priorité étant basé sur une caractéristique de dispositif, la caractéristique comprenant : une adresse de protocole Internet (IP) d'un dispositif et/ou une adresse de contrôle d'accès média (MAC).

15. Dispositif de traitement d'informations selon la revendication 11, le classement par ordre de priorité étant basé sur une caractéristique d'application.

16. Dispositif de traitement d'informations selon la revendication 11, le classement par ordre de priorité étant basé sur une caractéristique de dispositif.

17. Dispositif de traitement d'informations selon la revendication 11, le classement par ordre de priorité étant basé sur un utilisateur.

18. Dispositif de traitement d'informations selon la revendication 11, le classement par ordre de priorité consistant à ajuster au moins l'une des deux demandes de largeur de bande prioritaires ou plus en fonction de la capacité de largeur de bande.

19. Dispositif de traitement d'informations selon la revendication 11, les instructions étant en outre exécutables par le processus pour : mémoriser les données de motif d'utilisation pour la connexion réseau ; le classement par ordre de priorité étant basé sur les données de motif d'utilisation.

20. Produit, comprenant : une mémoire ayant un code mémorisé en son sein, le code étant exécutable par un processeur et comprenant : un code qui identifie une caractéristique d'une connexion réseau ; un code qui identifie deux demandes de largeur de bande ou plus associées à la connexion réseau ; un code qui détermine, en fonction de la caractéristique, que les deux demandes de largeur de bande ou plus exigent un classement par ordre de priorité de largeur de bande ; et un code qui classe par ordre de priorité, en fonction de la détermination, au moins l'une des deux demandes de largeur de bande ou plus, **caractérisé en ce que** la caractéristique comprend une capacité de largeur de bande de la connexion réseau, l'identification de la capacité de largeur de bande de la connexion réseau étant mise à jour à des périodes de temps de temps prédéfinies.
